# EUROPÄISCHE PATENTSCHRIFT

(11) **EP 3 630 564 B1**
(45) Veröffentlichungstag und Bekanntmachung des Hinweises auf die Patenterteilung: **31.08.2022**
(21) Anmeldenummer: 18736802.2
(22) Anmeldetag: 22.05.2018
(51) Int. Cl.: B60T 13/66, B60T 17/22

(54) **ELEKTROPNEUMATISCHE BREMSEINRICHTUNG MIT SICHERER STROMVERSORGUNG ZUR REALISIERUNG EINER NOTBREMSFUNKTION**
ELECTROPNEUMATIC BRAKE DEVICE HAVING A SECURE POWER SUPPLY FOR IMPLEMENTING AN EMERGENCY BRAKING FUNCTION
DISPOSITIF DE FREINAGE ÉLECTROPNEUMATIQUE COMPRENANT UNE ALIMENTATION EN COURANT FIABLE POUR LA RÉALISATION D'UNE FONCTION DE FREINAGE DE SECOURS

(30) Priorität: 24.05.2017 DE 102017208887
(43) Veröffentlichungstag der Anmeldung: 08.04.2020
(73) Patentinhaber: KNORR-BREMSE Systeme für Schienenfahrzeuge GmbH, 80809 München (DE)
(72) Erfinder: HERDEN, Marc-Oliver, 81377 München (DE); FISCHER, Marcus, 80469 München (DE); RIEDIGER, Oliver, 81547 München (DE); SCHMIDT, Maximilian, 80797 München (DE)
(86) Internationale Anmeldenummer: PCT/EP2018/063329
(87) Internationale Veröffentlichungsnummer: WO 2018/215428

(56) Entgegenhaltungen:
- EP-A2- 0 157 944
- WO-A1-2010/025892
- WO-A1-2013/034720
- WO-A2-2011/086029
- DE-A1-102012 223 901
- DE-C1- 10 018 400

## Beschreibung

Die vorliegende Erfindung bezieht sich auf eine elektropneumatische Bremseinrichtung für ein Schienenfahrzeug, die einen pneumatischen Bremszylinder, einen Zwischenbehälter, in dem Druckluft gespeichert ist, eine erste Druckluftleitung, die dazu konfiguriert ist, dem Zwischenbehälter über ein Rückschlagventil Druckluft zuzuführen, und eine zweite Druckluftleitung aufweist, die dazu konfiguriert ist, dem Bremszylinder Druckluft aus dem Zwischenbehälter über eine Ventilvorrichtung zuzuführen. Die Bremseinrichtung ist dazu konfiguriert, eine Notbremsfunktion durchzuführen, indem die Ventilvorrichtung ein Notbremssignal von einer Notbremsschleife aufnimmt, um die Druckluft aus dem Zwischenbehälter zu dem Bremszylinder zuzuführen. Die vorliegende Erfindung bezieht sich auch auf ein entsprechendes Schienenfahrzeug.

Es sind elektropneumatische Bremseinrichtungen bekannt, bei denen die Ventilvorrichtung jeweils als ein rein elektrisches, pneumatisches oder elektropneumatisches Ventil ausgebildet ist. Die Auslösung und Durchführung der Notbremsunktion erfolgt demnach rein elektrisch, pneumatisch oder elektropneumatisch. Diese Systeme sind in den meisten Fällen "low aktiv", d. h. das Abfallen einer elektrischen Spannung oder eines pneumatischen Druckes setzt Luft aus dem Zwischenbehälter frei, der so auslegt ist, dass sein Volumen für bis zu drei aufeinanderfolgende Notbremsungen innerhalb einer zugesicherten Dauer. Die notwendige Bremskraft ist durch die in diesem Zwischenbehälter gespeicherte Druckluft gewährleistet. Die Freisetzung der Druckluft vom Zwischenbehälter zum Bremszylinder erfolgt durch nicht-elektronische Komponenten (nämlich rein elektrische, pneumatische oder elektropneumatische Komponenten) und wird somit als hinreichend sicher angesehen.

WO 2010/025892 A1 offenbart eine elektropneumatische Bremseinrichtung, in der Druckluft von einem Zwischenbehälter über eine Ventilvorrichtung einem Bremszylinder zugeführt wird. bei einer Notbremsung wird die Ventilvorrichtung von einem Gleitschutzrechner entsprechend eines lastabhängigen Sollwerts angesteuert. Ferner weist die Bremseinrichtung einen Drucksensor zur Erfassung eines anliegenden Bremsdrucks auf.

WO 2011/086029 A2 zeigt eine Bremsanordnung eines Schienenfahrzeugs, die in einer Bremseinrichtung in einer Druckluftleitung, mit der ein Relaisventil angesteuert wird, einen Drucksensor aufweist. Ferner ist ein Druckluftspeicher über ein Rückschlagventil mit einer Hauptbehälterluftleitung verbunden.

In DE 100 18 400 C1 und EP 0 157 944 A2 ist eine Ventilanordnung bzw. ein Drucksteuerventil für druckmittelbetätigte Bremsanlagen gezeigt, bei denen eine Ventileinrichtung eine elektronische Steuervorrichtung aufweist.

Die Notbremsung erfolgt mit einer hohen bzw. maximal verfügbaren Bremskraft, wodurch die Räder blockieren können. Es ist daher die Aufgabe der vorliegenden Erfindung, eine elektropneumatische Bremseinrichtung vorzusehen, die das Blockieren der Räder bei der Notbremsung vermeiden kann. Diese Aufgabe wird durch die elektropneumatische Bremseinrichtung mit den Merkmalen des Anspruchs 1 gelöst, indem die Ventilvorrichtung eine elektronische Steuervorrichtung aufweist, die den Bremsdruck regelt, welcher dem Bremszylinder aus dem Zwischenbehälter zugeführt wird. Durch die Bremsdruckregelung kann das Blockieren der Räder unterbunden werden, was durch die rein elektrische, pneumatische oder elektropneumatische Lösung aus dem Stand der Technik bislang nicht möglich war. Die Aufgabe wird auch durch ein Schienenfahrzeug mit den Merkmalen des Anspruchs 4 gelöst. Vorteilhafte Weiterbildungen der vorliegenden Erfindung sind in den abhängigen Ansprüchen definiert.

Erfindungsgemäße ist eine Vielzahl der elektronischen Steuervorrichtungen vorhanden, und die Stromversorgung der elektronischen Steuervorrichtung ist ausfallsicher gestaltet, indem zumindest eine von folgenden Konfigurationen implementiert ist: a) die elektronischen Steuervorrichtungen haben jeweils einen Anschluss, der dazu bestimmt ist, an einer redundanten, zentralen Stromversorgung des Schienenfahrzeugs angeschlossen zu werden; b) die elektronischen Steuervorrichtungen sind jeweils an einer eigenen, unabhängigen, nicht-redundanten Stromversorgung angeschlossen; c) die elektronischen Steuervorrichtungen haben jeweils einen Anschluss, der dazu bestimmt ist, an einer nicht-redundanten, zentraler Stromversorgung des Schienenfahrzeugs angeschlossen zu werden, und sie sind zusätzlich jeweils an einen eigenen, unabhängigen, nicht-redundanten Ladungsspeicher angeschlossen.

Dadurch wird gewährleistet, dass der Bremsdruck durch Verwenden der elektronischen Steuervorrichtungen einerseits regelbar ist und andererseits eine vergleichbare Ausfallsicherheit wie bei einem herkömmlichen rein elektrischen, pneumatischen oder elektropneumatischen Ventil erzielt wird.

In der Konfiguration a) weist die zentrale Stromversorgung zumindest zwei unabhängige, redundante Akkumulatoren oder Batterien auf. Bei einem Ausfall der einen Batterie kann die Stromversorgung von der anderen Batterie übernommen werden. In den Konfigurationen b) und c) weist die eigene, unabhängige, nicht-redundante Stromversorgung bzw. der eigene, unabhängige, nicht-redundante Ladungsspeicher vorzugsweise einen Akkumulator oder eine Batterie auf, wodurch eine besonders hohe Kapazität bereitgestellt werden kann. Alternativ kann die eigene, unabhängige, nicht-redundante Stromversorgung bzw. der eigene, unabhängige, nicht-redundante Ladungsspeicher in den Konfigurationen b) und c) eine Diode oder einen Kondensator aufweisen, die besonders kompakt sind.

Vorzugsweise ist der Ladungsspeicher in der Konfiguration c) so auslegt, dass sein Volumen für eine, zwei oder drei aufeinanderfolgende Notbremsungen innerhalb eines vorbestimmten Zeitraums, vorzugsweise 30 Minuten, ausreicht. Dadurch kann die Zuverlässigkeit der Notbremsfunktion gewährleistet werden.

Vorzugsweise ist in der zweiten Bremsdruckleitung ein Drucksensor zur Ermittlung des tatsächlichen Bremsdrucks angeordnet, der einen Istwert des Bremsdrucks erfasst. Die Regelung des Bremsdrucks ist softwareimplementiert und kann durch eine Sollwertvorgabe mit konstantem Sollwert erfolgen, um die Prozessorleistung gering zu halten. Alternativ kann die Sollwertvorgabe mit zeitvariablem Sollwert erfolgen, um das Ansprechverhalten zu verbessern. In diesem Fall kann der zeitvariable Sollwert stufenweise oder kontinuierlich geändert werden. Damit können die Bremsdrücke von verschiedenen Bremseinrichtungen individuell und optimal abgestimmt werden, so dass ein gewünschtes Bremsverhalten des gesamten Schienenfahrzeugs erreicht werden kann. Durch die softwareimplementierte Bremsdruckregelung können die Sollwerte an die Gegebenheiten variabel angepasst werden, ohne dass die Hardware geändert werden muss.

Vorzugsweise erfasst die elektronische Steuervorrichtung eine Statusgröße der elektropneumatischen Bremseinrichtung, um eine Diagnose der elektropneumatischen Bremseinrichtung durchzuführen, wobei die Statusgröße zumindest den tatsächlichen Bremsdruck, eine Differenz zwischen tatsächlichem Bremsdruck und Sollwert, einen Druck im Zwischenbehälter, eine zeitliche Druckänderung im Bremszylinder oder im Zwischenbehälter, eine elektrische Spannung der zentralen Stromversorgung aus dem Schienenfahrzeug, eine elektrische Spannung der eigenen, unabhängigen, nicht-redundanten Stromversorgung oder eine elektrische Spannung des eigenen, unabhängigen, nicht-redundanten Ladungsspeichers umfasst. Durch die Verwendung der elektronischen Steuervorrichtungen anstelle des elektrischen, pneumatischen oder elektropneumatischen Ventils kann gegenüber dem Stand der Technik eine Diagnosefunktion ohne weiteren Hardwareaufwand implementiert werden.

Vorzugweise hat das Schienenfahrzeug zumindest ein Drehgestell oder Wagen, an denen jeweils zumindest zwei elektropneumatische Bremseinrichtungen gemäß Anspruch 1 vorgesehen sind. Damit lassen sich die Bremsdrücke an jedem Drehgestell oder Wagen individuell einstellen. Darüber hinaus wird. eine Redundanz hergestellt, da zumindest zwei elektropneumatische Bremseinrichtungen pro Drehgestell oder Wagen vorhanden sind. Die vorliegende Erfindung ist besonders vorteilhaft, wenn das Schienenfahrzeug zumindest zwei von solchen Drehgestellen oder Wagen aufweist.

Die einzelnen Sollwerte der elektropneumatischen Bremseinrichtungen sind vorzugsweise so bestimmt, dass ein Gesamtbremsdruck zum Erreichen einer Gesamtbremskraft des Schienenfahrzeugs bewirkt wird. Weiter bevorzugt wird zur Reduzierung der Gesamtbremskraft ein Sollbremsdruck wenigstens einer elektropneumatische Bremseinrichtung reduziert. Weiter bevorzugt sind die einzelnen elektropneumatischen Bremseinrichtungen zu- und abschaltbar.

Ein bevorzugtes Merkmal der vorliegenden Erfindung ist, dass die Sollwerte der einzelnen elektropneumatischen Bremseinrichtungen in Abhängigkeit einer Geschwindigkeit des Schienenfahrzeugs, einer Beschleunigung des Schienenfahrzeugs und/oder einer Masse des Schienenfahrzeugs oder des zugehörigen Drehgestells oder Wagens bestimmt sind. Damit können die einzelnen Bremsdrücke untereinander optimal abgestimmt werden, so dass ein weiter verbessertes Bremsverhalten des gesamten Schienenfahrzeugs erreicht werden kann.

Nachfolgend werden Ausführungsbeispiele der vorliegenden Erfindung anhand der beigefügten Zeichnungen beschrieben.
- Fig. 1: zeigt eine schematische Grundstruktur eines Teils einer elektropneumatischen Bremseinrichtung für ein Schienenfahrzeug;
- Fig. 2: zeigt ein erstes Ausführungsbeispiel einer Konfiguration a) einer elektropneumatischen Bremseinrichtung für ein Schienenfahrzeug;
- Fig. 3: zeigt ein zweites Ausführungsbeispiel einer Konfiguration b) einer elektropneumatischen Bremseinrichtung für ein Schienenfahrzeug; und
- Fig. 4: zeigt ein drittes Ausführungsbeispiel einer Konfiguration c) einer elektropneumatischen Bremseinrichtung für ein Schienenfahrzeug.

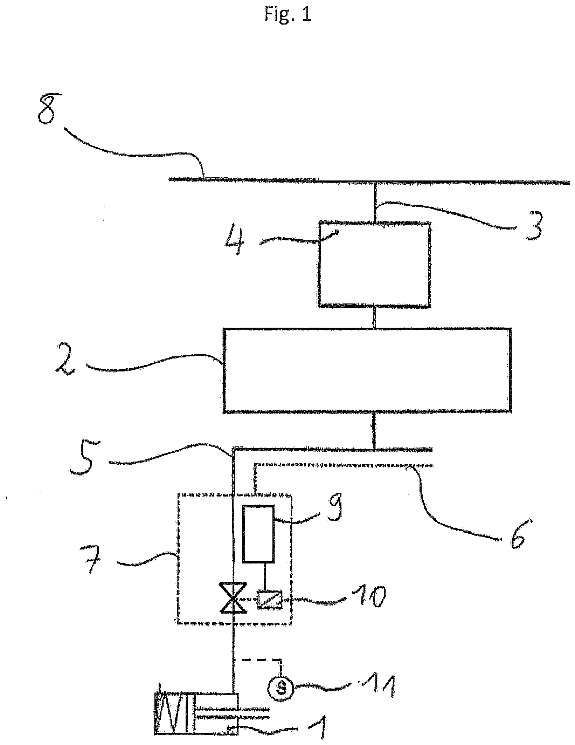

Die **Fig. 1** zeigt eine schematische Grundstruktur eines Teils einer elektropneumatischen Bremseinrichtung für ein Schienenfahrzeug. Die elektropneumatische Bremseinrichtung hat einen pneumatischen Bremszylinder1, einen Zwischenbehälter 2, in dem Druckluft gespeichert ist, eine erste Druckluftleitung 3, die dazu konfiguriert ist, dem Zwischenbehälter 2 über ein Rückschlagventil 4 Druckluft zuzuführen, und eine zweite Druckluftleitung 5, die dazu konfiguriert ist, dem Bremszylinder 1 Druckluft aus dem Zwischenbehälter 2 über eine Ventilvorrichtung 7 zuzuführen. Die erste Druckluftleitung 3 wird durch eine zentrale Hauptdruckluftleitung 8 gespeist. Die Bremseinrichtung ist dazu konfiguriert, eine Notbremsfunktion durchzuführen, indem die Ventilvorrichtung 7 ein Notbremssignal von einer Notbremsschleife aufnimmt, um die Druckluft aus dem Zwischenbehälter 2 zu dem Bremszylinder 1 zuzuführen. Der Zwischenbehälter 2 ist vorzugsweise so auslegt, dass sein Volumen für eine, zwei oder drei aufeinanderfolgende Notbremsungen innerhalb eines vorbestimmten Zeitraums, vorzugsweise 30 Minuten, ausreicht.

Gemäß der vorliegenden Erfindung weist die Ventilvorrichtung 7 ein Stellglied 10 wie zum Beispiel ein Solenoidventil und eine elektronische Steuervorrichtung 9 auf, die das Stellglied 10 so antreibt, dass der Bremsdruck geregelt wird, welcher dem Bremszylinder 1 aus dem Zwischenbehälter 2 zugeführt wird. Die elektronische Steuervorrichtung 9 kann durch einen Mikrocontroller gebildet sein. Das Bezugszeichen 6 bezeichnet eine Leitung einer elektrischen Stromversorgung für die Ventilvorrichtung 7 mitsamt der elektronischen Steuervorrichtung 9 und dem Stellglied 10.

Der vorstehend beschriebene Teil der Grundstruktur, wie er in der Fig. 1 gezeigt ist, wird in mehreren, nachfolgend beschriebenen Ausführungsbeispielen verwendet, die sich lediglich hinsichtlich der Konfiguration der Stromversorgung unterscheiden.

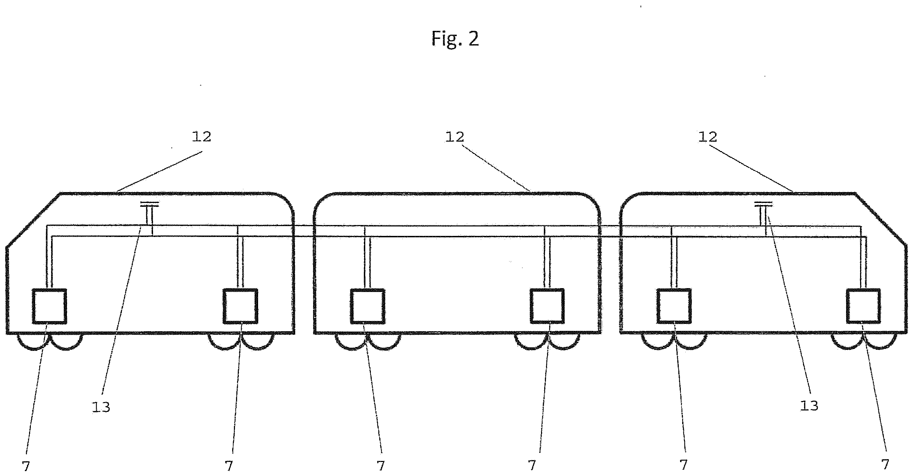

Die **Fig. 2** zeigt ein erstes Ausführungsbeispiel einer Konfiguration einer elektropneumatischen Bremseinrichtung für ein Schienenfahrzeug. Es ist ein Schienenfahrzeug dargestellt, das aus drei Drehgestellen 12 oder Wagen 12 mit entsprechenden Radsätzen besteht. Pro Radsatz ist zumindest eine Ventilvorrichtung 7 vorgesehen. Damit ist gleichzeitig eine Vielzahl der in den jeweiligen Ventilvorrichtungen 7 angeordneten, elektronischen Steuervorrichtungen 9 vorhanden, und die Stromversorgung jeder elektronischen Steuervorrichtung 9 ist ausfallsicher gestaltet, indem die elektronischen Steuervorrichtungen 9 jeweils einen Anschluss haben, der dazu bestimmt ist, an einer redundanten, zentralen Stromversorgung 13 des Schienenfahrzeugs angeschlossen zu werden. Vorzugsweise weist die zentrale Stromversorgung 13 zumindest zwei unabhängige, redundante Akkumulatoren oder Batterien auf.

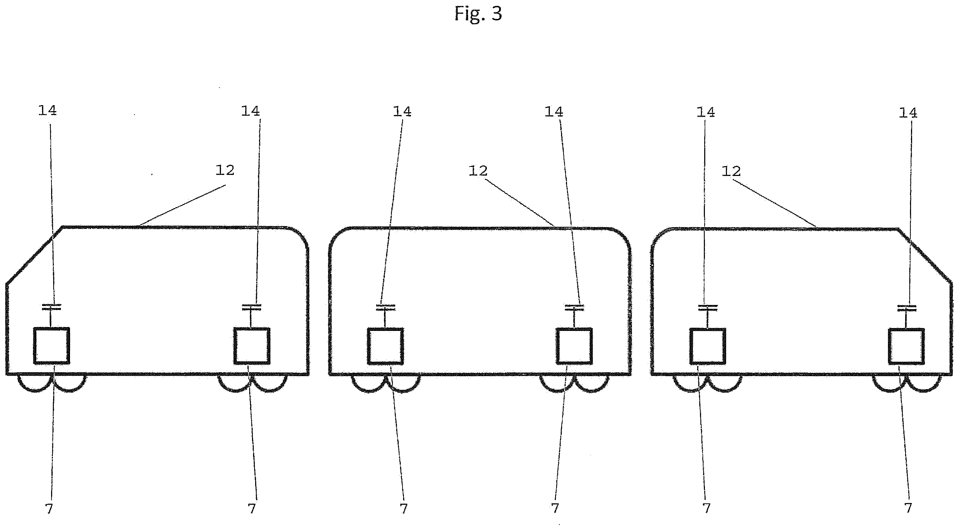

Die **Fig. 3** zeigt ein zweites Ausführungsbeispiel einer Konfiguration einer elektropneumatischen Bremseinrichtung für ein Schienenfahrzeug. Es ist ein Schienenfahrzeug dargestellt, das aus drei Drehgestellen 12 oder Wagen 12 mit entsprechenden Radsätzen besteht. Pro Radsatz ist zumindest eine Ventilvorrichtung 7 vorgesehen. Jedes Drehgestell 12 oder Wagen 12 verfügt damit über eine Vielzahl (d.h. zumindest zwei) der elektropneumatischen Bremseinrichtungen. Damit ist gleichzeitig eine Vielzahl der in den jeweiligen Ventilvorrichtungen 7 angeordneten, elektronischen Steuervorrichtungen 9 vorhanden, und die Stromversorgung jeder elektronischen Steuervorrichtung 9 ist ausfallsicher gestaltet, indem die elektronischen Steuervorrichtungen 9 jeweils an einer eigenen, unabhängigen, nicht-redundanten Stromversorgung 14 angeschlossen sind.

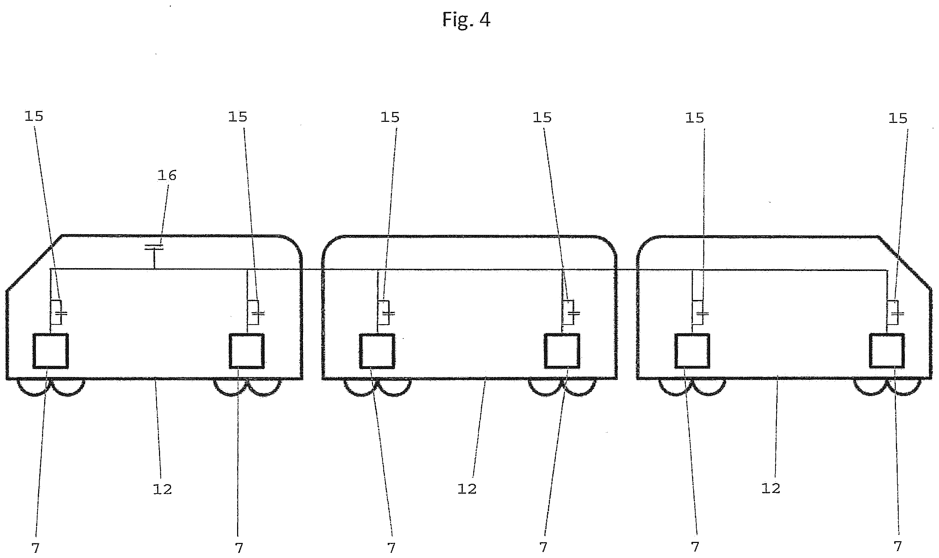

Die **Fig. 4** zeigt ein drittes Ausführungsbeispiel einer Konfiguration einer elektropneumatischen Bremseinrichtung für ein Schienenfahrzeug. Es ist ein Schienenfahrzeug dargestellt, das aus drei Drehgestellen 12 oder Wagen 12 mit entsprechenden Radsätzen besteht. Pro Radsatz ist zumindest eine Ventilvorrichtung 7 vorgesehen, Damit ist gleichzeitig eine Vielzahl der in den jeweiligen Ventilvorrichtungen 7 angeordneten, elektronischen Steuervorrichtungen 9 vorhanden, und die Stromversorgung jeder elektronischen Steuervorrichtung 9 ist ausfallsicher gestaltet, indem die elektronischen Steuervorrichtungen 9 jeweils einen Anschluss haben, der dazu bestimmt ist, an einer nicht-redundanten zentraler Stromversorgung 16 des Schienenfahrzeugs angeschlossen zu werden, und indem sie zusätzlich jeweils an einen eigenen, unabhängigen, nicht-redundanten Ladungsspeicher 15 angeschlossen sind. Der Ladungsspeicher 15 ist vorzugsweise so auslegt, dass sein Volumen für eine, zwei oder drei aufeinanderfolgende Notbremsungen innerhalb eines vorbestimmten Zeitraums, vorzugsweise 30 Minuten, ausreicht.

Im zweiten und im dritten Ausführungsbeispiel ist die eigene, unabhängige, nicht-redundante Stromversorgung 14 bzw. der eigene, unabhängige, nicht-redundante Ladungsspeicher 15 vorzugsweise ein Akkumulator, eine Batterie, Diode oder ein Kondensator. Der Kondensator kann ein so genannter Supercap sein.

Gemäß der Fig. 1 ist in der zweiten Bremsdruckleitung 5 vorzugsweise ein Drucksensor 11 zur Ermittlung des tatsächlichen Bremsdrucks angeordnet. Der tatsächliche Bremsdruck wird in einer Regelschleife als ein Istwert zu der elektronischen Steuervorrichtungen 9 rückgeführt, die anhand eines Vergleichs zwischen Istwert und einem Sollwert den Bremsdruck regelt. Die Regelung des Bremsdrucks durch eine derartige Sollwertvorgabe kann entweder mit konstantem Sollwert oder mit zeitvariablem Sollwert erfolgen. Die Regelung des Bremsdrucks durch die elektronische Steuervorrichtung 9 ist softwareimplementiert, zum Beispiel indem der Sollwert durch einen Algorithmus unter Einbeziehung verschiedener Parameter berechnet wird.

Vorzugsweise erfasst die elektronische Steuervorrichtung 9 eine Statusgröße der elektropneumatischen Bremseinrichtung, um eine Diagnose der elektropneumatischen Bremseinrichtung durchzuführen, wobei die Statusgröße zumindest den tatsächlichen Bremsdruck, eine Differenz zwischen tatsächlichem Bremsdruck und Sollwert, einen Druck im Zwischenbehälter 2, eine zeitliche Druckänderung im Bremszylinder 1 oder im Zwischenbehälter 2, eine elektrische Spannung der zentralen Stromversorgung 13, 16 aus dem Schienenfahrzeug 12, eine elektrische Spannung der eigenen, unabhängigen, nicht-redundanten Stromversorgung 14 oder eine elektrische Spannung des eigenen, unabhängigen, nicht-redundanten Ladungsspeichers 15 umfasst.

In den Figuren 2 bis 4 ist gezeigt, dass das Schienenfahrzeug zumindest zwei Drehgestelle 12 oder Wagen 12 umfassen, an denen jeweils zumindest zwei der vorstehend beschriebenen elektropneumatischen Bremseinrichtungen vorgesehen sind.

Damit ist es möglich, die einzelnen Sollwerte der elektropneumatischen Bremseinrichtungen so zu bestimmen, dass ein Gesamtbremsdruck zum Erreichen einer Gesamtbremskraft des Schienenfahrzeugs bewirkt wird. Vorzugsweise wird zur Reduzierung der Gesamtbremskraft ein Sollbremsdruck wenigstens einer elektropneumatische Bremseinrichtung reduziert. Es ist auch möglich, die einzelnen elektropneumatischen Bremseinrichtungen je nach Bedarf zu- und abzuschalten. Die Sollwerte der einzelnen elektropneumatischen Bremseinrichtungen sind stufenweise und/oder kontinuierlich änderbar.

Vorzugsweise sind die Sollwerte der einzelnen elektropneumatischen Bremseinrichtungen in Abhängigkeit einer Geschwindigkeit des Schienenfahrzeugs, einer Beschleunigung des Schienenfahrzeugs und/oder einer Masse des Schienenfahrzeugs oder des zugehörigen Drehgestells 12 oder Wagens 12 bestimmt.

Die Bremsdruckregelung durch die elektronische Steuervorrichtung 9 ist softwareimplementiert. Zu diesem Zweck ist ein Computerprogrammprodukt wie zum Beispiel ein Speicher vorgesehen, in dem ein Programm gespeichert ist, das, wenn es durch die elektronische Steuervorrichtung 9 der elektropneumatische Bremseinrichtung ausgeführt wird, die elektropneumatische Bremseinrichtung dazu veranlasst, den Bremsdruck zu regeln, welcher dem Bremszylinder 1 aus dem Zwischenbehälter 2 zugeführt wird.

Die vorstehend beschriebenen Ausführungsbeispiele können im Rahmen des Schutzumfangs abgewandelt werden, der in den beigefügten Ansprüchen definiert ist.

### BEZUGSZEICHENLISTE

- 1: Bremszylinder
- 2: Zwischenbehälter
- 3: erste Druckluftleitung
- 4: Rückschlagventil
- 5: zweite Druckluftleitung
- 6: Stromversorgungsleitung
- 7: Ventilvorrichtung
- 8: Hauptdruckluftleitung
- 9: elektronische Steuervorrichtung
- 10: Solenoidventil
- 11: Drucksensor
- 12: Drehgestell oder Wagen
- 13: redundante, zentrale Stromversorgung
- 14: nicht-redundante Stromversorgung
- 15: nicht-redundanter Ladungsspeicher
- 16: nicht-redundante zentrale Stromversorgung

## Patentansprüche

1. Elektropneumatische Bremseinrichtung für ein Schienenfahrzeug, mit
einem pneumatischen Bremszylinder (1);
einem Zwischenbehälter (2), in dem Druckluft gespeichert ist;
einer ersten Druckluftleitung (3), die dazu konfiguriert ist, dem Zwischenbehälter (2) Druckluft zuzuführen; und
einer zweiten Druckluftleitung (5), die dazu konfiguriert ist, dem Bremszylinder (1) Druckluft aus dem Zwischenbehälter (2) über eine Ventilvorrichtung (7) zuzuführen;
wobei die Bremseinrichtung dazu konfiguriert ist, eine Notbremsfunktion durchzuführen, indem die Ventilvorrichtung (7) ein Notbremssignal von einer Notbremsschleife aufnimmt, um die Druckluft aus dem Zwischenbehälter (2) zu dem Bremszylinder (1) zuzuführen,
in der zweiten Druckluftleitung (5) ein Drucksensor (11) zur Ermittlung des tatsächlichen Bremsdrucks angeordnet ist; und
die Regelung des Bremsdrucks softwareimplementiert ist und durch eine Sollwertvorgabe entweder mit konstantem Sollwert oder einem zeitvariablem Sollwert erfolgt, der stufenweise oder kontinuierlich änderbar ist,
**dadurch gekennzeichnet, dass**
die erste Druckluftleitung ein Rückschlagventil (4) aufweist, über das die Druckluft dem Zwischenbehälter zugeführt wird, und
die Ventilvorrichtung (7) eine elektronische Steuervorrichtung (9) aufweist, die den Bremsdruck regelt, welcher dem Bremszylinder (1) aus dem Zwischenbehälter (2) zugeführt wird,
wobei eine Vielzahl der elektronischen Steuervorrichtungen (9) vorhanden ist und die Stromversorgung der elektronischen Steuervorrichtung (9) ausfallsicher gestaltet ist, indem zumindest eine von folgenden Konfigurationen implementiert ist:
a) die elektronischen Steuervorrichtungen (9) haben jeweils einen Anschluss, der dazu bestimmt ist, an einer redundanten, zentraler Stromversorgung (13) des Schienenfahrzeugs angeschlossen zu werden;
b) die elektronischen Steuervorrichtungen (9) sind jeweils an einer eigenen, unabhängigen, nicht-redundanten Stromversorgung (14) angeschlossen;
c) die elektronischen Steuervorrichtungen (9) haben jeweils einen Anschluss, der dazu bestimmt ist, an einer nicht-redundanten zentralen Stromversorgung (16) des Schienenfahrzeugs angeschlossen zu werden, und sie sind zusätzlich jeweils an einen eigenen, unabhängigen, nicht-redundanten Ladungsspeicher (15) angeschlossen; und
die redundante, zentrale Stromversorgung (13) in der Konfiguration a) zumindest zwei unabhängige, redundante Akkumulatoren oder Batterien aufweist; und
die eigene, unabhängige, nicht-redundante Stromversorgung (14) in der Konfiguration b) oder der eigene, unabhängige, nicht-redundante Ladungsspeicher (15) in der Konfigurationen c) einen Akkumulator, eine Batterie, eine Diode oder einen Kondensator aufweist.

2. Elektropneumatische Bremseinrichtung gemäß Anspruch 1 ,
wobei die elektronische Steuervorrichtung (9) eine Statusgröße der elektropneumatischen Bremseinrichtung erfasst, um eine Diagnose der elektropneumatischen Bremseinrichtung durchzuführen, wobei die Statusgröße zumindest den tatsächlichen Bremsdruck, eine Differenz zwischen tatsächlichem Bremsdruck und seinem Sollwert, einen Druck im Zwischenbehälter (2), eine zeitliche Druckänderung im Bremszylinder (1) oder im Zwischenbehälter (2), eine elektrische Spannung der zentralen Stromversorgung (13, 16) aus dem Schienenfahrzeug, eine elektrische Spannung der eigenen, unabhängigen, nicht-redundanten Stromversorgung (14) oder eine elektrische Spannung des eigenen, unabhängigen, nicht-redundanten Ladungsspeichers (15) umfasst.

3. Elektropneumatische Bremseinrichtung gemäß einem der vorangehenden Ansprüche,
wobei der Ladungsspeicher (15) in der Konfiguration c) so auslegt ist, dass sein Volumen für eine, zwei oder drei aufeinanderfolgende Notbremsungen innerhalb eines vorbestimmten Zeitraums, vorzugsweise 30 Minuten, ausreicht.

4. Schienenfahrzeug mit einem Drehgestell (12) oder Wagen (12), an dem zumindest zwei elektropneumatische Bremseinrichtungen gemäß einem der Ansprüche 1 bis 3 vorgesehen sind.

5. Schienenfahrzeug gemäß Anspruch 4,
wobei die einzelnen Sollwerte der elektropneumatischen Bremseinrichtungen so bestimmt sind, dass ein Gesamtbremsdruck zum Erreichen einer Gesamtbremskraft des Schienenfahrzeugs bewirkt wird.

6. Schienenfahrzeug gemäß Anspruch 4 oder 5,
wobei zur Reduzierung der Gesamtbremskraft ein Sollbremsdruck wenigstens einer elektropneumatische Bremseinrichtung reduziert wird.

7. Schienenfahrzeug gemäß einem der Ansprüche 4 bis 6,
wobei die einzelnen elektropneumatischen Bremseinrichtungen (9) zu- und abschaltbar sind.

8. Schienenfahrzeug gemäß einem der Ansprüche 4 bis 7,
wobei die Sollwerte der einzelnen elektropneumatischen Bremseinrichtungen in Abhängigkeit einer Geschwindigkeit des Schienenfahrzeugs, einer Beschleunigung des Schienenfahrzeugs und/oder einer Masse des Schienenfahrzeugs oder des zugehörigen Drehgestells (12) oder Wagens (12) bestimmt sind.

## Claims

1. Electropneumatic braking device for a rail vehicle, with
a pneumatic brake cylinder (1);
an intermediate tank (2) in which compressed air is stored;
a first compressed air line (3) that is configured to supply compressed air to the intermediate tank (2); and
a second compressed air line (5) that is configured to supply compressed air from the intermediate tank (2) to the brake cylinder (1) via a valve device (7);
wherein the braking device is configured to perform an emergency braking function in that the valve device (7) receives an emergency braking signal from an emergency braking loop in order to feed the compressed air from the intermediate tank (2) to the brake cylinder (1),
a pressure sensor (11) is arranged in the second compressed air line (5) to determine the actual braking pressure; and
the control of the braking pressure is implemented in software and is carried out by a setpoint value specification with either a constant setpoint value or a time variable setpoint value which can be changed in stages or continuously,
**characterized in that**
the first compressed air line has a non-return valve (4), via which the compressed air is supplied to the intermediate tank, and
the valve device (7) has an electronic control device (9) that regulates the braking pressure which is fed to the brake cylinder (1) from the intermediate tank (2),
wherein there are a number of the electronic control devices (9) and the power supply of the electronic control device (9) is designed to be fail-safe **in that** at least one of the following configurations is implemented:
a) the electronic control devices (9) each comprise a connection intended to be connected to a redundant, central power supply (13) of the rail vehicle;
b) the electronic control devices (9) are each connected to a dedicated, independent, non-redundant power supply (14) ;
c) the electronic control devices (9) each comprise a connection intended to be connected to a non-redundant, central power supply (16) of the rail vehicle, and they are additionally each connected to a dedicated, independent, non-redundant charge storage device (15); and
the redundant central power supply (13) in configuration a) comprises at least two independent, redundant accumulators or batteries; and
the dedicated, independent, non-redundant power supply (14) in configuration b) or the dedicated, independent, non-redundant charge storage device (15) in configuration c) comprises an accumulator, a battery, a diode or a capacitor.

2. Electropneumatic braking device according to Claim 1,
wherein the electronic control device (9) detects a state variable of the electropneumatic braking device in order to carry out a diagnosis of the electropneumatic braking device, wherein the state variable includes at least the actual braking pressure, a difference between the actual braking pressure and the setpoint value thereof, a pressure in the intermediate tank (2), a change of pressure in the brake cylinder (1) or in the intermediate tank (2) with time, an electrical voltage of the central power supply (13, 16) from the rail vehicle, an electrical voltage of the dedicated, independent, non-redundant power supply (14) or an electrical voltage of the dedicated, independent, non-redundant charge storage device (15).

3. Electropneumatic braking device according to either of the preceding claims,
wherein the charge storage device (15) in configuration c) is designed so that the volume thereof is sufficient for one, two or three successive emergency braking operations within a predetermined time period, preferably 30 minutes.

4. Rail vehicle with a bogie (12) or a carriage (12), on which at least two electropneumatic braking devices according to one of Claims 1 to 3 are provided.

5. Rail vehicle according to Claim 4,
wherein the individual setpoint values of the electropneumatic braking devices are defined so that a total braking pressure is caused to achieve a total braking force of the rail vehicle.

6. Rail vehicle according to Claim 4 or 5,
wherein a setpoint braking pressure of at least one electropneumatic braking device is reduced to reduce the total braking force.

7. Rail vehicle according to one of Claims 4 to 6,
wherein the individual electropneumatic braking devices (9) can be switched on and off.

8. Rail vehicle according to one of Claims 4 to 7,
wherein the setpoint values of the individual electropneumatic braking devices are defined depending on a speed of the rail vehicle, an acceleration of the rail vehicle and/or a mass of the rail vehicle or the associated bogie (12) or carriage (12).

## Revendications

1. Dispositif électropneumatique de freinage d'un véhicule ferroviaire, comprenant
un cylindre (1) pneumatique de frein ;
un récipient (2) intermédiaire, dans lequel de l'air comprimé est accumulé ;
un premier conduit (3) pour de l'air comprimé, qui est configuré pour apporter de l'air comprimé au récipient (2) intermédiaire ; et
un deuxième conduit (5) pour de l'air comprimé, qui est configuré pour apporter, par l'intermédiaire d'un dispositif (7) de soupape, de l'air comprimé du récipient (2) intermédiaire au cylindre (1) de frein ;
dans lequel le dispositif de freinage est configuré pour effectuer une fonction de freinage de secours par le fait que le dispositif (7) de soupape reçoit un signal de freinage d'urgence d'une boucle de freinage d'urgence, afin d'apporter au cylindre (1) de frein de l'air comprimé à partir du récipient (2) intermédiaire,
un capteur (11) de pression, pour la détermination de la pression de frein réelle, est monté dans le deuxième conduit (5) pour de l'air comprimé ; et
la régulation de la pression de frein est mise en œuvre par logiciel et s'effectue par une prescription de valeur de consigne ou bien à valeur de consigne constante ou à valeur de consigne variable en fonction du temps, qui peut être modifiée par palier ou continuellement,
**caractérisé en ce que**
le premier conduit pour de l'air comprimé a un clapet (4) antiretour, par lequel l'air comprimé peut être apporté au récipient intermédiaire, et
le dispositif (7) de soupape a un dispositif (9) électronique de commande, qui régule la pression de frein, qui est appliquée à partir du récipient (2) intermédiaire au cylindre (1) de frein,
dans lequel il y a une pluralité des dispositifs (9) électroniques de commande et l'alimentation en courant du dispositif (9) électronique de commande est à l'épreuve d'une défaillance par le fait qu'au moins l'une des configurations suivantes est mise en œuvre :
a) les dispositifs (9) électroniques de commande ont chacun une borne, qui est destinée à être raccordée à une alimentation (13) en courant centrale redondante du véhicule ferroviaire ;
b) les dispositifs (9) électroniques de commande sont raccordés chacun à une alimentation (14) en courant propre, indépendante, non redondante ;
c) les dispositifs (9) électroniques de commande ont chacun une borne, qui est destinée à être raccordée à une alimentation (16) en courant centrale non redondante du véhicule ferroviaire, et ils sont en outre raccordés chacun à un accumulateur (15) de charge propre indépendant non redondant ; et
l'alimentation (13) en courant centrale redondante a, dans la configuration a), au moins deux accumulateurs ou batteries indépendants redondants ; et
l'alimentation (14) en courant propre, indépendante, non redondante, dans la configuration b) ou l'accumulateur (15) de charge propre, indépendant, non redondant dans les configurations c), a un accumulateur, une batterie, une diode ou un condensateur.

2. Dispositif électropneumatique de freinage suivant la revendication 1,
dans lequel le dispositif (9) électronique de commande détecte une grandeur d'état du dispositif électropneumatique de freinage pour effectuer un diagnostic du dispositif électropneumatique de freinage, la grandeur d'état comprenant au moins la pression de frein réelle, une différence entre la pression de frein réelle et sa valeur de consigne, une pression dans le récipient (2) intermédiaire, une variation de la pression en fonction du temps dans le cylindre (1) de frein ou dans le récipient (2) intermédiaire, une tension électrique de l'alimentation (13, 16) en courant centrale à partir du véhicule ferroviaire, une tension électrique de l'alimentation (14) en courant propre, indépendante, non redondante ou une tension électrique de l'accumulateur (15) de charge propre, indépendant, non redondant.

3. Dispositif électropneumatique de freinage suivant l'une des revendications précédentes,
dans lequel l'accumulateur (15) de charge est conçu dans la configuration c) de manière à ce que son volume soit suffisant pour un, deux ou trois freinages de secours successifs en un laps de temps défini à l'avance, de préférence en 30 minutes.

4. Véhicule ferroviaire ayant un bogie (12) ou une caisse (12), sur lequel sont prévus au moins deux dispositifs électropneumatiques de freinage suivant l'une des revendications 1 à 3.

5. Véhicule ferroviaire suivant la revendication 4,
dans lequel les diverses valeurs de consignes des dispositifs électropneumatiques de freinage sont accordées de manière à obtenir une pression d'ensemble de frein pour atteindre une force d'ensemble de freinage du véhicule ferroviaire.

6. Véhicule ferroviaire suivant la revendication 4 ou 5,
dans lequel, pour réduire la force d'ensemble de freinage, on réduit une pression de freinage de consigne d'au moins un dispositif électropneumatique de freinage.

7. Véhicule ferroviaire suivant l'une des revendications 4 à 6,
dans lequel les divers dispositifs (9) électropneumatiques de freinage peuvent être branchés et débranchés.

8. Véhicule ferroviaire suivant l'une des revendications 4 à 7,
dans lequel les valeurs de consigne des divers dispositifs électropneumatiques de freinage sont déterminées en fonction d'une vitesse du véhicule ferroviaire, d'une accélération du véhicule ferroviaire et/ou d'une masse du véhicule ferroviaire et/ou du bogie (12) ou de la caisse (12), qui lui appartient.
